# EUROPÄISCHE PATENTSCHRIFT

(11) **EP 1 916 181 B1**
(45) Veröffentlichungstag und Bekanntmachung des Hinweises auf die Patenterteilung: **01.12.2010**
(21) Anmeldenummer: 07014853.1
(22) Anmeldetag: 28.07.2007
(51) Int. Cl.: B62D 47/02, B62D 53/00

(54) **Gelenk zwischen zwei gelenkig miteinander verbundenen Fahrzeugteilen, z. B. eines Gelenkfahrzeugs**
Coupling between two articulated vehicle parts, e.g. for an articulated vehicle
Dispositif d'attelage entre deux éléments de véhicule articulé, par exemple d'un véhicule articulé

(30) Priorität: 25.10.2006 DE 102006050210
(43) Veröffentlichungstag der Anmeldung: 30.04.2008
(73) Patentinhaber: Hübner GmbH, 34123 Kassel (DE)
(72) Erfinder: Koch, Robert, 37242 Bad Sooden-Allendorf (DE); Scharf, Lothar, 37242 Bad Sooden-Allendorf (DE)
(74) Vertreter: Walther, Walther & Hinz GbR

(56) Entgegenhaltungen:
- DE-A1- 4 231 323
- DE-A1- 10 153 460
- DE-A1- 10 360 289
- DE-U1- 29 803 504
- US-A1- 2004 261 650
- US-A1- 2006 138 746

## Beschreibung

Die vorliegende Erfindung betrifft ein Gelenk zwischen zwei gelenkig miteinander verbundenen Fahrzeugteilen, z. B. eines Gelenkfahrzeugs, insbesondere eines Gelenkbusses, umfassend ein Knickgelenk, wobei das Knickgelenk durch eine Gelenkanordnung mit sphärischem Lager zur Übertragung der Nick- und Wankbewegungen mit dem einen Fahrzeugteil verbunden ist, wobei das Knickgelenk zwei Gelenksegmente umfasst, die um eine vertikale Achse drehbar miteinander verbunden sind, wobei das eine Gelenksegment durch die Gelenkanordnung mit dem einen Fahrzeugteil verbunden ist.

Ein aus mehreren Teilen kuppelbares Gelenkfahrzeug ist aus dem Stand der Technik hinreichend bekannt. Die Teile eines solchen Gelenkfahrzeuges sind durch eine Gelenkverbindung miteinander gekuppelt. Die Gelenkverbindung wird durch einen Balg überspannt, wobei zum Hinüberwechseln von Personen von dem einen zu dem anderen Fahrzeugteil eine Übergangsbrücke vorgesehen ist.

Bekanntermaßen werden Gelenkzüge den verschiedensten Bewegungsarten unterworfen. So müssen die Gelenke in der Lage sein, sowohl Wank-, Nick- als auch Knickbewegungen aufzunehmen. Der Begriff des Gelenks umfasst im vorliegenden Fall die gesamte Anordnung zwischen den beiden Fahrzeugteilen. Unter Wankbewegungen versteht man solche Bewegungen, bei denen sich die beiden Fahrzeugteile relativ zueinander um die Längsachse verdrehen, Knickbewegungen sind solche, die auftreten, wenn der Gelenkzug mit den beiden Fahrzeugteilen um eine Kurve fährt, wohingegen Nickbewegungen entstehen, wenn ein solcher Gelenkzug durch eine Senke oder über eine Kuppe fährt. Zum Durchfahren von Kurven und z. B. zum Durchfahren von Senken weist eine bekannte Gelenkverbindung zwischen den Fahrzeugteilen ein Knick- und ein Nickgelenk auf. Bei dem Nickgelenk handelt es sich um ein solches, das eine Bewegung der beiden Fahrzeugteile relativ zueinander um eine Achse quer zur Längsachse des Fahrzeugs ermöglicht. Üblicherweise sind die hierbei vorgesehenen Nicklager als Metallgummilager ausgebildet.

Bislang ist man davon ausgegangen, dass auf Grund der Eigenelastizität der Chassis der jeweiligen Fahrzeugteile die Wankbewegungen von den Chassis selbst aufgenommen werden. Zu dieser Annahme bestand insbesondere deshalb Veranlassung, weil die Wankwinkel maximal 10 Grad, üblicherweise jedoch nur zwischen 5 und 7 Grad betrugen. Es hat sich allerdings zwischenzeitlich herausgestellt, dass selbst bei solchen verhältnismäßig geringen Wankwinkeln Momente von bis zu 30 KNm auf das Gelenk bzw. auch auf das Chassis wirken. Insofern sind Beschädigungen am Chassis und/oder am Gelenk nicht auszuschließen. Insbesondere auch das Knickgelenk, das für einen Gelenkzug die Möglichkeit eröffnet Kurven zu durchfahren, ist sehr starken Belastungen ausgesetzt. Dies spiegelt sich darin wieder, dass im Bereich des Knickgelenkes Wälzlager erheblicher Dimensionen eingebaut werden müssen, die schlussendlich nicht nur die Aufsattellasten zwischen den Wagenteilen übertragen, sondern darüber hinaus auch in der Lage sind, bei den bereits erläuterten Wankbewegungen die entsprechenden auftretenden Kräfte zu übertragen.

In diesem Zusammenhang sind in Bezug auf die Lagerung bereits bestimmte Lager bekannt, die sowohl eine Bewegung in Richtung der Nickachse als auch in Richtung der Wankachse zulassen.

So ist aus dem DE 298 03 504 U1 ein Gelenk bekannt, bei dem die Gelenkglieder im Bereich ihrer Verbindung elastisch nachgiebig gegeneinander abstützbar miteinander verbunden sind. Die elastische nachgiebige Verbindung erfolgt durch ein sogenanntes elastisches Schichtlager, das mehrere Schichten aus einem elastischen Werkstoff aufweist, zwischen denen allerdings auch Einlagen aus steiferem Material angeordnet sind. Dieses Lager lässt insbesondere bereits Nick- und Wankbewegungen zu, jedoch ist der Winkel, um den Nick- und Wankbewegungen zugelassen werden, so gering, dass bei Fahrbewegungen, die einen höheren Nick- oder Wankwinkel erfordern, immer noch eine erhebliche Belastung auf die Chassis der Fahrzeuge ausgeübt wird.

Des Weiteren ist aus der DE 32 08 615 A1 ein Gelenkbus bekannt, der sowohl Wankbewegungen als auch Nickbewegungen zulässt. Sowohl zur Übertragung der Nick- als auch der Wankbewegung sind hierbei sogenannte Gummi-Metalllager vorgesehen, die zu beiden Seiten des Knickgelenks angeordnet sind und die die Achsstummel des Gelenkteiles des einen Fahrzeugs aufnehmen. Auch hier gilt, dass die Kräfte, insbesondere bei starken Wankbewegungen, die auf die Fahrzeugchassis ausgeübt werden, erheblich sind.

Ein ähnliches Lager, wie die zuvor abgehandelte DE 32 08 615 A1 zeigt auch die DE 42 35 493 A1. Allerdings ist hier durch geeignete Maßnahmen die Steifigkeit des Gummi-Metalllagers veränderbar.

Bei der Gelenkanordnung gemäß der DE 42 31 323 A1 ist ein Knickgelenk vorgesehen, wobei das Knickgelenk ebenfalls durch zwei Gummi-Metalllager an dem einen Fahrzeugchassis angelenkt ist. Wankbewegungen sind hierbei nur im Rahmen der Elastizität der Gummi-Metalllager für sowohl Wank- als auch Nickbewegungen übertragbar, allerdings ist auch hier die Übertragung entsprechender Nick- und Wankbewegungen, und hier insbesondere entsprechender Nickbewegungen konstruktionsbedingt durch die Ausbildung der Gummi-Metalllager begrenzt. Insbesondere gilt dies für aufzunehmende Wankbewegungen, da zwei derartige Gummi-Metalllager zu beiden Seiten der Mittellängsachse des Fahrzeugs vorgesehen sind, auch wenn die Gummi-Metalllager sphärisch ausgebildet sind.

Um nun die Chassis und auch das Gelenk von derartig durch Wankbewegungen hervorgerufenen Kräften zu entlasten, wird erfindungsgemäß vorgeschlagen, dass die Gelenkanordnung zur Bildung eines Wankgelenks einen Wankgelenkkörper aufweist, der ein sphärisches Lager aufweist, das in einer Gehäusehülse drehbar eingespannt gehalten ist, wobei zu beiden Seiten des Lagers Lagerstützen vorgesehen sind, die den Wankgelenkkörper in der Gehäusehülse gegen eine Bewegung um eine vertikale Achse abstützen. Ein solches sphärisches Lager ermöglicht eine Bewegung um die von dem Lager aufgenommene Achse um alle drei Raumrichtungen. Dieses sphärisches Lager, das vom Grundsatz her eine derartige Bewegung ermöglicht, ist nach Art eines Ringes ausgebildet und erstreckt sich nur über einen Teil, insbesondere einen geringen Teil der Länge der Gehäusehülse, so dass insbesondere das Chassis bzw. das Gelenk als solches von Momenten aufgrund von Wank- und Nickbewegungen freigeschaltet ist. Grundsätzlich gilt, dass sich allein aufgrund eines solchen Lagers bei anstehenden Knickbewegungen, also bei Bewegungen, die bei einer Fahrt eines solchen Busses durch eine Kurve hervorgerufen werden, auch die Achse des sphärischen Lagers entsprechend in der Gehäusehülse bewegen würde. Dies wird durch die Lagerstützen verhindert.

Dadurch, dass durch die Gelenkanordnung nunmehr die Übertragung von Nick- und insbesondere von größeren Wankbewegungen möglich ist, können sowohl die Belastungen auf die Chassis der beiden Fahrzeugteile als auch auf das Gelenk vermindert werden. Insofern können bei dem Knickgelenk kleinere und weniger aufwändige Lager, z. B. Gleitlager, eingesetzt werden, da das Knickgelenk in diesem Fall im Wesentlichen ausschließlich die Aufsattellast zu tragen hat. Auch die Kräfte auf das Nicklager vermindern sich, da - wie bereits ausgeführt - bei Wankbewegungen ohnehin auch immer das Nicklager mit belastet wird.

Weitere vorteilhafte Ausführungsformen und Merkmale der Ausführungsformen sind den Unteransprüchen zu entnehmen.

Das eine Gelenksegment ist im vorliegenden Fall nach Art eines dreieckförmigen Flügels ausgebildet und weist seitliche Dämpfer zur Verbindung mit dem Chassis des anderen Fahrzeugteils auf. Durch diese Dämpfer kann die Knickbewegung des Gelenkfahrzeugs gedämpft erfolgen, was im Extremfall bedeutet, dass das Gelenk an sich durch die Dämpfer völlig starr wird.

Das Lager zeichnet sich im Einzelnen durch einen mehrschichtigen Aufbau aus, wobei wechselseitig Ringe aus einem Elastomerwerkstoff und einem gering elastischen Werkstoff, z. B. Metall, vorgesehen sind, wobei vorzugsweise der äußere Ring aus dem gering elastischen Werkstoff, also Metall, ausgebildet und in der Gehäusehülse verpresst ist. Das bedeutet, dass - um Nickbewegungen zuzulassen - durch den mehrschichtigen Aufbau des sphärischen Lagers in Form von wechselweisen Schichten aus Metall und Elastomerwerkstoff die Nickbewegungen innerhalb des sphärischen Lagers aufgenommen werden.

Auch die Lagerstütze ist ganz ähnlich wie das sphärische Lager mehrschichtig aufgebaut, wobei wechselweise ringsegmentförmige Elemente aus Elastormerwerkstoff und gering elastischen Werkstoff, z. B. Metall, vorgesehen sind. Hierbei ist zur Vermeidung von übermäßigem Verschleiß ebenfalls vorgesehen, das äußere ringsegmentförmige Element aus gering elastischem Werkstoff, also insbesondere Metall, auszubilden. Mit diesem äußeren Teilsegment liegt nun auch die Lagerstütze an der Innenwandung der Gehäusehülse an. Auch die Nickbewegung des Gelenkes als solche ist durch diese Lagerstützen zu beiden Seiten des sphärischen Lagers nicht gestört, da diese Lagerstützen in ähnlicher Weise ausgebildet sind, wie das sphärische Lager. Die Achse der Gelenkanordnung dient darüber hinaus der Verbindung mit dem einen Fahrzeugteil. Eine Knickbewegung um die z-Achse ist nahezu unterbunden.

Zur Verbindung der Gelenkanordnung mit dem Chassis ist vorgesehen, dass der Wankgelenkkörper seitliche Achsstummel besitzt, die der Verbindung mit dem einen Fahrzeugteil oder Chassis dienen.

Anhand der Zeichnungen wird die Erfindung nachstehend beispielhaft näher erläutert.
- Fig. 1: zeigt einen Gelenkbus, schematisch in einer Seitenansicht;
- Fig. 2: zeigt das Gelenk in perspektivischer Darstellung;

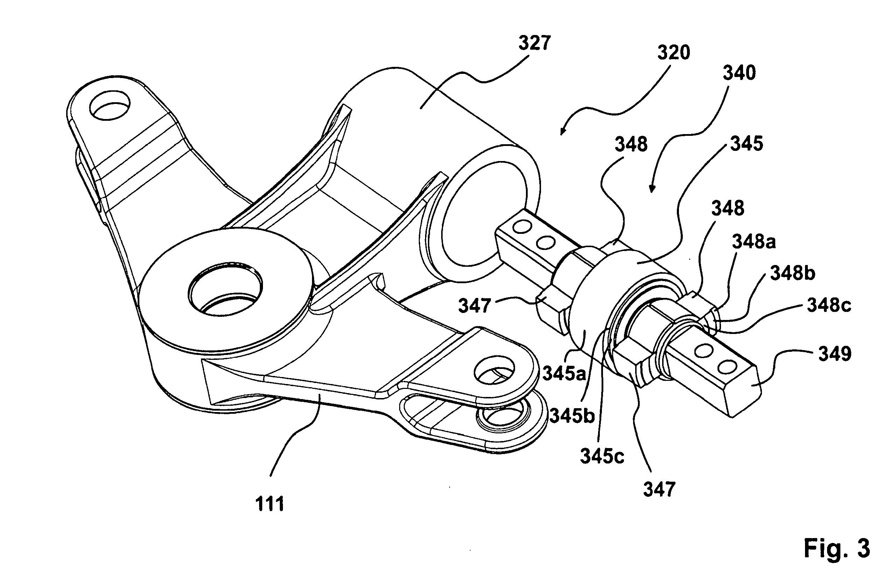

- Fig. 3: zeigt die Gelenkanordnung in perspektivischer Darstellung gemäß Fig. 2 in vergrößerter Darstellung.

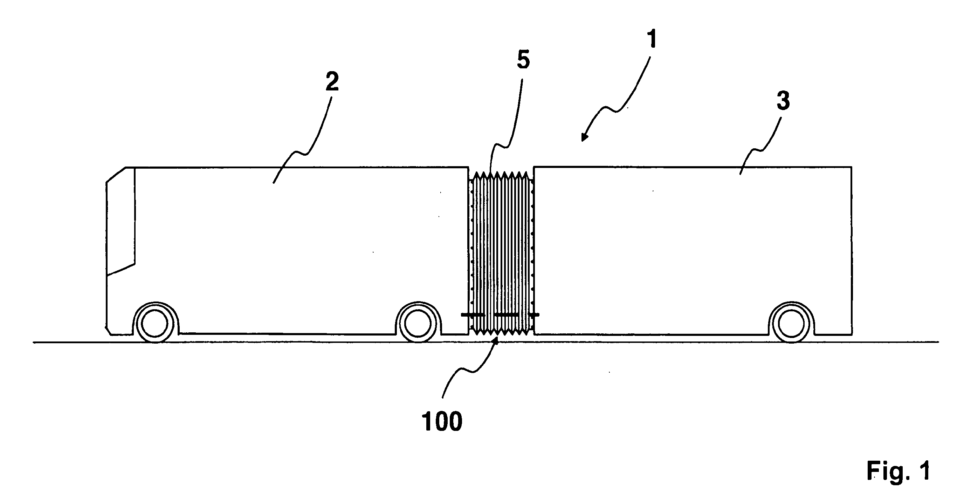

Gemäß der Fig. 1 weist der insgesamt mit 1 bezeichnete Gelenkbus die beiden Fahrzeugteile 2 und 3 auf, die durch einen Gelenk 100 miteinander verbunden sind. Um Personen das Hinüberwechseln von einem Fahrzeugteil in das andere Fahrzeugteil zu ermöglichen, ist über dem Gelenk eine Übergangsbrücke angeordnet (nicht dargestellt), wobei sowohl die Übergangsbrücke als auch das Gelenk von einem im Querschnitt U-förmig ausgebildeten Balg 5 umspannt werden.

Gegenstand der Erfindung ist nunmehr das Gelenk, das die beiden Fahrzeugteile 2, 3 miteinander verbindet. Zunächst einmal sei darauf hingewiesen, dass der Begriff des Gelenks sämtliche Teile umfasst, die zwischen den beiden Fahrzeugteilen zur Verbindung der Fahrzeugteile untereinander, ausgenommen Übergangsbrücke und Balg, notwendig sind.

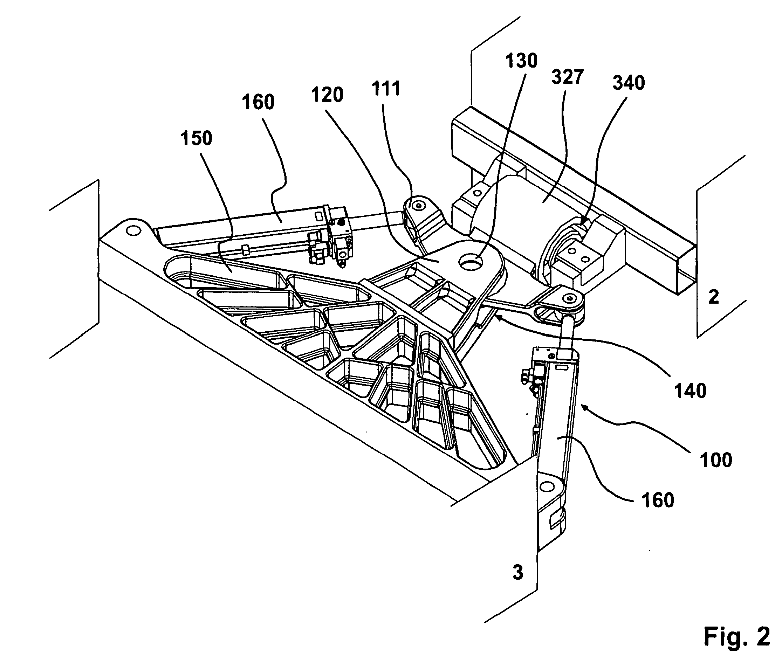

Das insgesamt mit 100 bezeichnete Gelenk der ersten Ausführungsform (Fig. 2) umfasst die beiden Gelenksegmente 111, 120, die durch eine vertikale Achse 130 zur Bildung des Knickgelenkes 140 miteinander verbunden sind. Das Gelenksegment 120 ist hierbei an einem Rahmen 150 angelenkt, der wiederum mit dem hinteren Fahrzeugteil 3 verbunden ist. Das Gelenksegment 111, das über seitlich abgehende Dämpfungselemente 160 durch den Rahmen 150 mit dem Fahrzeug 3 verbunden ist, weist eine zylindrische Gehäusehülse 327 auf, die den Wankgelenkkörper 340 drehbar aufnimmt.

Der Wankgelenkkörper 340 umfasst eine Achse 349, auf der mittig ein sphärisches Lager 345 angeordnet ist, wobei zu beiden Seiten des sphärischen Lagers 345 jeweils zwei sich horizontal erstreckende Lagerstützen 347, 348 vorgesehen sind.

Das sphärische Lager 345 weist ein mehrschichtigen Aufbau auf; ein mehrschichtiger Aufbau bedeutet in diesem Fall, dass das Lager aus mehreren Schichten wechselweise aus Ringen aus einem Elastomerwerkstoff und einem über bzw. darunter befindlichen Metallring ausgebildet ist. Hierbei ist wesentlich, dass der äußere Ring 345a aus Metall, der darunter liegende Ring 345b aus einem Elastomerwerkstoff und der sich darunter befindliche Ring 345c wiederum aus Metall usw. ausgebildet ist. Ein entsprechender Aufbau ergibt sich für die Lagerstützen 347, 348; dies insofern, als auch dort mehrere ringsegmentförmige Elemente 348a, 348b, 348c wechselweise als Metallsegmente und Segmente aus einem Elastomerwerkstoff vorgesehen sind. Der Aufbau der Lagerstütze 347 entspricht der der Lagerstütze 348.

Im eingebauten Zustand des Wankgelenkkörpers 340 in der Gehäusehülse 347 ist das sphärische Lager 345 mit seinem äußeren Ring 345a aus Metall in der Gehäusehülse verspannt. Das heißt bei auftretenden Nickbewegungen erfolgt die Ausführung der Nickbewegungen aus dem sphärischen Lager 345 als solchem, nämlich insofern, als sich die einzelnen Ringe gegeneinander verdrehen können. Hieraus folgt, dass die Nickbewegungen durch das Lager als solches aufgenommen werden.

Die Größe der zuzulassenden Wankbewegungen ist einerseits abhängig von der Breite des Lagers 345 sowie dessen Durchmesser und schlussendlich der Länge der Gehäusehülse 327. Im Extremfall wird die Wankbewegung dadurch begrenzt, dass die Achse 349 an die Innenwand der Gehäusehülse 327 stößt.

Wie bereits ausgeführt, führt ein Gelenkfahrzeug beim Durchfahren von Kurven Knickbewegungen aus. Eine solche Knickbewegung erfolgt um die Z-Achse. Um nun zu verhindern, dass solche Knickbewegungen bis in die Gelenkanordnung 320 fortsetzen, sind die Lagerstützen 347, 348 vorgesehen. Denn diese behindern eine Bewegung der Achse 349 um die Z-Achse. D. h., für die Knickbewegung ist ausschließlich das Knicklager zuständig.

## Patentansprüche

1. Gelenk (100) zwischen zwei gelenkig miteinander verbundenen Fahrzeugteilen (2, 3), z. B. eines Gelenkfahrzeugs, umfassend ein Knickgelenk, wobei das Knickgelenk durch eine Gelenkanordnung (320) mit sphärischem Lager zur Übertragung von Nick- und Wankbewegungen mit dem einen Fahrzeugteil (2, 3) verbunden ist, wobei das Knickgelenk (140) zwei Gelenksegmente(111, 120) umfasst, die um eine vertikale Achse drehbar miteinander verbunden sind, wobei das eine Gelenksegment durch die Gelenkanordnung (320) mit dem einen Fahrzeugteil (2, 3) verbunden ist,
**dadurch gekennzeichnet,**
**dass** die Gelenkanordnung (320) zur Bildung eines Wankgelenks einen Wankgelenkkörper (340) aufweist, der ein sphärisches Lager (345) aufweist, das in einer Gehäusehülse (327) um die Nickachse drehbar eingespannt gehalten ist, wobei zu beiden Seiten des Lagers (345) Lagerstützen (347, 348) vorgesehen sind, die den Wankgelenkkörper (340) in der Gehäusehülse (327) gegen eine Bewegung um eine vertikale Achse abstützen, wie sie bei einer Knickbewegung des Gelenks auftritt.

2. Gelenk nach Anspruch 1,
**dadurch gekennzeichnet,**
**dass** das sphärische Lager (345) nach Art eines Ringes ausgebildet ist, und sich nur über einen Teil, insbesondere geringen Teil der Länge der Gehäusehülse (327) erstreckt.

3. Gelenk nach einem der voranstehenden Ansprüche,
**dadurch gekennzeichnet,**
**dass** das sphärische Lager (320) mehrschichtig (345a, 345b, 345c) aufgebaut ist, wobei wechselweise Ringe aus einem Elastomerwerkstoff und gering elastischem Werkstoff, z. B. Metall, vorgesehen sind.

4. Gelenk nach Anspruch 3,
**dadurch gekennzeichnet,**
**dass** der äußere Ring (345) aus gering elastischem Werkstoff in der Gehäusehülse (327) verpresst ist.

5. Gelenk nach einem der voranstehenden Ansprüche,
**dadurch gekennzeichnet,**
**dass** die Lagerstütze (347, 348) mehrschichtig aufgebaut ist, wobei wechselweise ringsegmentförmige Elemente (348 a, b, c; 347 a, b, c,) aus Elastomerwerkstoff und gering elastischem Werkstoff, z. B. Metall, vorgesehen sind.

6. Gelenk nach Anspruch 5,
**dadurch gekennzeichnet,**
**dass** das äußere ringsegmentförmige Element (347, 348) aus gering elastischem Werkstoff ausgebildet ist.

7. Gelenk nach einem der voranstehenden Ansprüche,
**dadurch gekennzeichnet,**
**dass** der Wankgelenkkörper (340) eine Achse (349) zur Aufnahme des sphärischen Lagers (345) und der Lagerstützen (347, 348) aufweist, wobei sich die Lagerstützen (347, 348) im Einbauzustand horizontal zu beiden Seiten der Achse (349) erstrecken.

8. Gelenk nach Anspruch 7,
**dadurch gekennzeichnet,**
**dass** durch die Achse die Gelenkanordnung (320) mit dem einen Fahrzeugteil (2) verbunden ist.

## Claims

1. Joint (100) between two pivotably interconnected vehicle parts (2, 3), for example an articulated vehicle, comprising an articulation joint, wherein the articulation joint is connected with one vehicle part (2, 3) by a joint arrangement (320) with a spherical bearing for transmission of pitching and rolling movements, wherein the articulation joint (140) comprises two joint segments (111, 120) connected together to be rotatable about a vertical axis, and wherein one joint segment is connected by the joint arrangement (320) with the one vehicle part (2, 3), **characterised in that** for formation of a roll joint the joint arrangement (320) has a roll joint body (340) comprising a spherical bearing (345) fixedly held in a housing sleeve (327) to be rotatable about the pitch axis, wherein bearing supports (347, 348) are provided on both sides of the bearing (345) and support the roll joint body (340) in the housing sleeve (327) against movement about a vertical axis such as arises in bending movement of the joint.

2. Joint according to claim 1, **characterised in that** the spherical bearing (345) is constructed in the manner of a ring and extends over only a part, particularly a small part, of the length of the housing sleeve (327).

3. Joint according to one of the preceding claims, **characterised in that** the spherical bearing (320) is of multi-layer construction (345a, 345b, 345c), wherein rings of an elastomeric material and a material of low elasticity, for example metal, are provided in alternation.

4. Joint according to claim 3, **characterised in that** the outer ring (345) of material of low elasticity is pressed into the housing sleeve (327).

5. Joint according to any one of the preceding claims, **characterised in that** the bearing support (347, 348) is of multi-layer construction, wherein annularly segmental elements (348a, 348b, 348c; 347a, 347b, 347c) of elastomeric material and material of low elasticity, for example, metal, are provided in alternation.

6. Joint according to claim 5, **characterised in that** the outer annularly segmental element (347, 348) is constructed of material of low elasticity.

7. Joint according to any one of the preceding claims, **characterised in that** the roll joint body (340) comprises an axle (349) for reception of the spherical bearing (345) and the bearing supports (347, 348), wherein in the installed state the bearing supports (347, 348) extend horizontally on both sides of the axle (349).

8. Joint according to claim 7, **characterised in that** the joint arrangement (320) is connected with the one vehicle part (2) by the axle.

## Revendications

1. Articulation (100) entre deux parties de véhicule (2, 3) reliées l'une à l'autre de façon articulée, par exemple celles d'un véhicule articulé, qui comprend une articulation de pliage, dans laquelle l'articulation de pliage est reliée à l'une des parties de véhicule (2, 3) par un dispositif d'articulation (320) qui comporte un palier sphérique pour la transmission de mouvements de tangage et de roulis, dans laquelle l'articulation de pliage (140) comprend deux segments d'articulation (111, 120) qui sont reliés entre eux avec possibilité de rotation autour d'un axe vertical, l'un des segments d'articulation étant relié à l'une des parties de véhicule (2, 3) par le dispositif d'articulation (320),
**caractérisée en ce que**
le dispositif d'articulation (320) comporte, pour la formation d'une articulation de roulis, un corps d'articulation de roulis (340) qui comporte un palier sphérique (345) qui est tenu encastré dans une douille enveloppe (327) avec possibilité de rotation autour de l'axe de tangage, tandis que des entretoises de palier (347, 348), qui donnent appui au corps d'articulation de roulis (340) à l'intérieur de la douille enveloppe (327) à l'encontre d'un mouvement autour d'un axe vertical, tel que celui qui se produit au cours d'un mouvement de pliage de l'articulation, sont prévues des deux côtés du palier (345).

2. Articulation selon la revendication 1,
**caractérisée en ce que**
le palier sphérique (345) est construit à la façon d'une bague et s'étend seulement sur une partie, en particulier sur une petite partie, de la longueur de la douille enveloppe (327).

3. Articulation selon l'une des revendications précédentes,
**caractérisée en ce que**
le palier sphérique (320) est de construction multicouche (345a, 345b, 345c) et comporte en alternance des bagues en matière élastomère et en matière peu élastique, par exemple en métal.

4. Articulation selon revendication 3,
**caractérisée en ce que**
la bague extérieure (345) en matière peu élastique est comprimée dans la douille enveloppe (327).

5. Articulation selon l'une des revendications précédentes,
**caractérisée en ce que**
l'entretoise de palier (347, 348) est de construction multicouche et comporte en alternance des éléments en forme de segments de bague (348a, b, c ; 347a, b, c) en matière élastomère et en matière peu élastique, par exemple en métal.

6. Articulation selon la revendication 5,
**caractérisée en ce que**
l'élément en forme de segment de bague extérieur (347, 348) est en matière peu élastique.

7. Articulation selon l'une des revendications précédentes,
**caractérisée en ce que**
le corps d'articulation de roulis (340) comporte un axe (349) agencé pour porter le palier sphérique (345) et les entretoises de palier (347, 348), les entretoises de palier (347, 348) s'étendant des deux côtés de l'axe (349), en position horizontale à l'état monté.

8. Articulation selon la revendication 7,
**caractérisée en ce que**
le dispositif d'articulation (320) est relié par l'axe à l'une (2) des parties de véhicule.
